# EUROPEAN PATENT SPECIFICATION

(11) **EP 3 562 891 B1**
(45) Date of publication and mention of the grant of the patent: **24.04.2024**
(21) Application number: 17913107.3
(22) Date of filing: 23.11.2017
(51) Int. Cl.: C08L 95/00, C08K 3/04, C08K 7/00, C08L 91/08

(54) **A MODIFIED BITUMINOUS MIXTURE AND A PRODUCTION METHOD THEREOF**
MODIFIZIERTE BITUMINÖSE MISCHUNG UND HERSTELLUNGSVERFAHREN DAFÜR
MÉLANGE BITUMEUX MODIFIÉ ET PROCÉDÉ DE PRODUCTION CORRESPONDANT

(30) Priority: 29.12.2016 TR 201619993
(43) Date of publication of application: 06.11.2019
(73) Proprietor: Turkiye Petrol Rafinerileri Anonim Sirketi Tupras, 41780 Korfez/Kocaeli (TR)
(72) Inventor: CANIAZ, Ramazan Oguz, 41790 Korfez/Kocaeli (TR); CETINTAS, Refika, 71001 Kirikkale (TR); BASKENT, Emel, 41790 Korfez/Kocaeli (TR); KOCAMAN, Elif, 41790 Korfez/Kocaeli (TR); ARCA, Serhat, 41790 Korfez/Kocaeli (TR); YASAR, Muzaffer, 34820 Avcilar/Istanbul (TR); GURDAL, Savas, Avcilar/Istanbul (TR)
(74) Representative: Cayli, Hülya
(86) International application number: PCT/TR2017/050590
(87) International publication number: WO 2019/009835

(56) References cited:
- EP-A1- 2 878 624
- EP-A2- 2 678 121
- WO-A1-2009/042675
- WO-A1-2016/076804
- GB-A- 1 285 895
- US-A- 3 801 341
- US-A- 3 802 898
- US-A- 5 036 119
- US-A- 5 707 171
- Robert N. Hunter ET AL: "The Shell Bitumen Handbook, Sixth Edition" In: "The Shell Bitumen Handbook, Sixth Edition", 1 January 2015 (2015-01-01), ICE Publishing, Westminster, London, UK, XP055552520, ISBN: 978-0-7277-5837-8 pages v-xi, the whole document
- Abdulhaq Hadi Abedali: "MS-2 Asphalt Mix Design Methods; 7th Edition", Manual Series N° 2 (MS-2), 1 January 2014 (2014-01-01), pages 1-197, XP055559446, ISBN: 978-1-934154-70-0 Retrieved from the Internet: URL:http://www.asphaltinstitute.org/ [retrieved on 2019-02-20] cited in the application
- Jose Garcia ET AL: "HMA Pavement Mix Type Selection Guide, Information Series 128", NAPA Information Series 128, 1 January 2001 (2001-01-01), pages 1-30, XP055561977, Retrieved from the Internet: URL:https://www.fhwa.dot.gov/publications/ research/infrastructure/pavements/asphalt/ HMA.pdf [retrieved on 2019-02-26]
- Anonymous: "The SUPERPAVE Mix Design System Manual of Specifications, Test Methods, and Practices, SHRP-A-379", Strategic Highway Research Program, 1 January 1994 (1994-01-01), pages 1-255, XP055560445, 2101 Constitution Avenue N.W. Washington, DC 20418, USA ISBN: 978-0-309-05764-6 Retrieved from the Internet: URL:http://onlinepubs.trb.org/onlinepubs/s hrp/SHRP-A-379.pdf [retrieved on 2019-02-21]
- Michael E Pumphrey ET AL: "Evaluation of performance graded asphalt binder equipment and testing protocol", , 1 April 2004 (2004-04-01), XP055562453, Morgantown, West Virginia, USA ISBN: 978-0-496-00356-3 Retrieved from the Internet: URL:https://web.statler.wvu.edu/~wwwasph/w vdohreports/Evaluating%20PG%20Binder%20Equ ipment%20and%20Tests-Pumphrey%2004-2004.pd f [retrieved on 2019-02-27]
- RAMZI TAHA ET AL: "Evaluation of Coke Dust-Modified Asphalt Using Superpave", JOURNAL OF MATERIALS IN CIVIL ENGINEERING, AMERICAN SOCIETY OF CIVIL ENGINEERS, US, vol. 10, no. 3, 1 August 1998 (1998-08-01) , pages 174-179, XP009158262, ISSN: 0899-1561, DOI: 10.1061/(ASCE)0899-1561(1998)10:3(174)
- A. A. Gadallah ET AL: "Effect of Petroleum Coke on Certain Paraffinic-Waxy Asphalt Cement Characteristics", Transportation Research Record 968, 1 January 1984 (1984-01-01), pages 1-8, XP055559457, United States Retrieved from the Internet: URL:http://onlinepubs.trb.org/Onlinepubs/t rr/1984/968/968-001.pdf [retrieved on 2019-02-20]
- HEINTZ E A: "The characterization of petroleum coke", CARBON, ELSEVIER, OXFORD, GB, vol. 34, no. 6, 1 January 1996 (1996-01-01), pages 699-709, XP004022291, ISSN: 0008-6223, DOI: 10.1016/0008-6223(96)00037-1

## Description

### Technical Field

The present invention relates to an alternative modified bituminous mixture and a production method thereof by which bitumen obtained by processing crude oil and removing light hydrocarbons therefrom through distillation is developed and improved.

### Prior Art

Bitumen is a mixture of hydrocarbons with high molecular weight, high viscosity, and high boiling point as a bottom product of distillation units wherein crude oil is processed and light hydrocarbons are removed therefrom by means of distillation. Bitumen is particularly used in asphalting and in making roofs and papers waterproof. Around 85% of bitumen produced is used in asphalt compositions which are employed in the pavement of roads. However, bitumen used in asphalt compositions fails in fulfilling the performance criteria applicable for bridges, crossroads, and highways where extreme hot/cold climates are prevalent. As a result of using bitumen which fails to fulfill the performance criteria, some problems are encountered in the form of heat- and fatigue-induced cracks or rutting in asphalt pavements.

The number of vehicles used increases year by year and as a result of this, more deformations are encountered on highways. Asphalt pavements are renewed almost yearly, leading to economic problems. Therefore, in order to prevent deformations occurring as a function of vehicle density, or to delay the occurrence of deformations, the use of high-performance bitumen materials in said roads becomes a necessity. In order to solve these problems, bitumen products are modified with various additives to give more durable asphalt products in which high-performance modified bitumen is used. Such durable asphalt products produced are used particularly in zones where asphalt pavements are expected to provide high performance.

There are many modified bitumen technologies according to the prior art, and such technologies are described e.g. in an article titled "Introduction to polymer modified bitumen (PmB)" (McNally et al.). As described in that article, many of modified bitumens according to the prior art involve polymeric additives to improve the temperature-sensitivity of bitumen. However, since said polymers are imported products, the costs of modified bitumens do increase, thereby increasing the importation costs of the country and negatively affecting the country's current deficit.

In the published patent application US3802898A according to the prior art is described an aggregate-based concrete material of which the mechanical properties are improved by means of a binder having a hydrocarbon content. Said concrete material comprises petroleum coke as a filler, wherein the petroleum coke has a size below 80 microns, is of low density, and is included in an amount of 2 -8,2% by weight.

According to the patent application US5036119A, there is disclosed a method for preparing a bitumen composition comprising carbon black and polymer. According to that method, less than 10% of carbon black with a size range of 5 - 500 nanometers is used together with block copolymers. In said document, it is discussed that the materials used for modifying bitumen increase the viscosity problematically, but no conclusion is drawn there to solve this problematic case. In addition to the said viscosity problem, the use of nanometer-sized materials makes the industrial use of this technology difficult because of the high energy to be used for grinding/breaking purposes. The documents according to the prior art describe the use of additives having small particle sizes. As the size of additive used with bitumen decreases, the viscosity of modified bitumen prepared increases and this, in turn, increases the energy costs in asphalt applications. Therefore, the documents according to the prior art are not satisfactory in terms of reducing the viscosity and high energy costs. The incorporation of materials of small particle sizes to bitumen also requires energy expenditure while the particle size of these materials are reduced, leading to extra costs.

### Brief Description of Invention

A modified bituminous mixture developed according to the present invention, for use in asphalt pavements on roads, comprises bitumen with a penetration value from 40 to 100 dmm, a styrene-conjugated diene triblock copolymer as a first additive, a viscosity-lowering agent as a second additive, comprising paraffin wax composed of aliphatic hydrocarbon chains comprising C40-C120 carbon, and a carbon-based solid petroleum coke as a third additive, with a particle size between 0.3 mm to 1.18 mm, which is a product of delayed coking units of refineries.

A method for producing a modified bituminous mixture for use in asphalt pavements on roads, developed according to the present invention, comprises the steps of: fluidizing the bitumen by heating the same preferably to 135°C; supplying fluidized bitumen to a pilot-sized polymer-modified bitumen unit comprising a first grinder; setting the temperature of said unit to 170-190°C and maintaining the set temperature; obtaining a mixture of bitumen-first additive by adding a predetermined amount of a first additive to bitumen ; grinding said mixture in a second grinder; subjecting the mixture from the second grinder to an aging process at 180°C and 250 rpm stirring speed for 1-4 hours bearing in mind the chemical structure of bitumen; following the completion of the aging process, obtaining a mixture of bitumen-first additive-second additive by adding a predetermined amount of a second additive to the mixture of bitumen-first additive and mixing the resulting mixture; adding 10% by weight of a predetermined amount of a third additive to the mixture of bitumen-first additive-second additive and mixing the resulting mixture; adding the remaining third additive to the mixture of bitumen-first additive-second additive so that each time 10% of the remaining third additive is added; obtaining a modified bituminous mixture by stirring the mixture comprising bitumen, first additive, second additive, and third additive for a predetermined amount of time.

By virtue of the modified bituminous mixture and the production method thereof according to the present invention, additives of larger particle sizes can be added to bitumen without encountering any homogeneity-related problems. Thus, low-viscosity modified bituminous mixtures are obtained, wherein these mixtures show more outstanding durability properties and provide a reduction in the energy costs of asphalt applications.

### Object of Invention

The object of the present invention is to develop a modified bituminous mixture and a production method thereof, for use in asphalt pavements, aiming to prevent crack- or rutting-related problems in asphalt pavements due to heat and fatigue.

Another object of the present invention is to develop a modified bituminous mixture and a production method thereof, allowing to obtain more durable asphalt products.

A further object of the present invention is to develop a modified bituminous mixture and a production method thereof, where the energy costs of asphalt production are lowered as a result of adding additives with higher particle size to bitumen without encountering any homogeneity-related problems.

Still another object of the present invention is to develop a modified bituminous mixture and a production method thereof, where the modified bituminous mixture has low viscosity and can bear a high proportion of additives.

### Description of Invention

Bitumen is obtained from the processing of crude oil and used in asphalt compositions. On the other hand, because of both extreme hot/cold climates, and the invariably increasing number of vehicles, the performance of bitumen and therefore of asphalts produced are not satisfactory and they fail to show the required durability. Deformed asphalt pavements have to be renewed regularly, this causing both environmental and economical problems. In order to solve such problems related to economy, environment and product properties, a modified bituminous mixture and a production method thereof are developed according to the present invention.

The modified bituminous mixture according to the present invention for use in asphalt pavements on roads, comprises bitumen with a penetration value from 40 to 100 dmm; a styrene-conjugated diene triblock copolymer as a first additive; a viscosity-lowering agent as a second additive comprising paraffin wax composed of aliphatic hydrocarbon chains comprising C40-C120 carbon; and a carbon-based solid petroleum coke as a third additive, with a particle size between 0.3 mm to 1.18 mm, which is a product of delayed coking units of refineries.

Petroleum coke is a side product of delayed coking units providing the production of light petroleum products from heavy oils. The modified bituminous mixtures according to the present invention comprise petroleum coke as a side product and therefore both enhancement is achieved in product quality and alternative application fields are provided for existing refinery side products in terms of technology and economy. Thus, a material which results as a side product is made use of. Additionally, considering that the grinding process of petroleum coke is a high energy-consuming process, the method according to the present invention involves less grinding and it is thus made possible to incorporate petroleum coke of larger sizes. By virtue of the present invention, petroleum coke with a particle size larger (above 300 micron) than that known from the prior art can be used without encountering any homogeneity-related problems to achieve a lower viscosity.

In a preferred embodiment of the bituminous mixture according to the present invention, said viscosity-lowering agent is preferably selected from a group comprising zeolite derivatives and/or a paraffin wax consisting of aliphatic hydrocarbon chains (comprising C40-C120 carbon) obtained by Fisher-Tropsch method .

In addition to polymers and petroleum coke, the viscosity-lowering agents are also such materials which can be used together with bituminous mixtures in asphalt production. Modifying bitumen of high viscosity with additives of particularly low particle size increases the viscosity of bitumen further and the resulting high viscosity, in turn, makes it more difficult to prepare the asphalt mixture and the operations conducted during pavement, thereby increasing the energy costs. On the other hand, adding particles of larger size to bitumen gives rise to homogeneity-related problems and results in phase separation problems in bitumen. By virtue of the method developed according to the present invention and the resulting products, both additives with larger sizes are used to keep low the rate of viscosity increase of modified bitumen in the mixture, and homogeneity-related problems are avoided. For this purpose, viscosity-lowering agents are used along with large particle size-materials such that a lower energy consumption is achieved.

A preferred embodiment according to the present invention is described in table 1, wherein the third additive is made up of at least 75% by weight of carbon, 0.5-5% by weight of hydrogen and 0.5-3% by weight of nitrogen.

**Table 1: Elemental Content Of Carbon-based Solid Petroleum Coke (additive 3), A Product Of Delayed Coking Units In Petroleum Refineries**

| **Element** | **Weight %** |
|---|---|
| Carbon | at least 75 |
| Hydrogen | 0,5-5 |
| Nitrogen | 0,5-3 |

Another preferred embodiment according to the present invention is described in table 2, wherein the size distribution of the third additive is such that 53.5% thereof is in the range of 300 - 600 micron, 25.7% thereof is in the range of 600 micron - 1.18 mm, and 20.8% thereof is larger than 1.18 mm.

**Table 2: Particle Size Distribution Of Carbon-based Solid Petroleum Coke (additive 3), A Product Of Delayed Coking Units In Petroleum Refineries**

| **Sieve size** | **% passing the sieve** |
|---|---|
| >1.18 mm | 20.8 |
| 600 micron - 1.18 mm | 25.7 |
| 300 - 600 micron | 53.5 |

Another preferred embodiment according to the present invention is described in table 3, wherein the first additive is a Styrene-Conjugated Diene Triblock Copolymer and has a specific weight of 0.94, a bulk density of 0.4 kg/dm³, a hardness of 70, and a melt flow rate of below 1 g/10min.

**Table 3: Properties of A Styrene-Conjugated Diene Triblock Copolymer (Additive 1)**

| **Property** | **Test method** | **Unit** | **Overall value** |
|---|---|---|---|
| Specific Weight | ISO 2781 | | 0.94 |
| Bulk Density | ASTM D 1895 method B | kg/dm³ | 0.4 |
| Hardness, Shore A (15s) | ASTM D 2240 | Hardness, Shore A (15s) | 70 |
| Melt Flow Rate, 200C/5kg | ISO 1133 | g/10min | <1 |

A preferred embodiment according to the present invention is described in table 4, wherein the third additive is petroleum coke, which is a side product of delayed coking units providing the production of light petroleum products from heavy oils in petroleum refineries, and has a humidity of 7.85%, a VCM (volatile combustible matters) content of 8.51 % by weight, a calorific value of 7349 kcal/kg, a sulfur content of 6.78% by weight, a clay content of 0.24%, and a grindability index of 58.0.

**Table 4: Properties of Carbon-based Solid Petroleum Coke (Additive 3), A Product Of Delayed Coking Units In Petroleum Refineries**

| **Property** | **Unit** | **Reference Limit Values** | | **Relative Uncertainty %(1)+/-** | **Measured Value** | **Test Method** |
|---|---|---|---|---|---|---|
| | | Minimum | Maximum | | | |
| Humidity, initially | % (m/m) | - | 12 | - | 7.85 | ASTM D 4931 |
| Volatile combustible matters (VCM), initially | % (m/m) | 8 | - | 8.48 | 8.51 | ASTM D 3175 |
| Calorific value, net, initially | Kcal/kg | Reported | - | 0.65 | 7349 | ASTM D 5865 |
| Sulfur, on a dry basis | % (m/m) | 2 | 9 | 9.22 | 6.78 | ASTM D 4239 |
| Ash, on a dry basis | % (m/m) | - | 1 | 5.71 | 0.24 | ASTM D 4422 |
| Grindability index (HGI), on a dry basis | - | 40 | 90 | 4.41 | 58.0 | ASTM D 5003 |

According to the present application, the modified bituminous mixture developed according to the present invention comprises 3 to 7% by weight of first additive, 0.1 to 1% by weight of second additive (viscosity-lowering agent), 5 to 25% by weight of third additive, and bitumen with a penetration value from 40 to 100 dmm. The test results of the modified bituminous mixture (Example 1) comprising the first, second and third additives at stated percentages by weight and the bitumen at stated penetration values as obtained according to AASHTO MP 1 (SUPERPAVE) standards are given in table 5. The grading of the modified bituminous mixture in the intervals given above is PG-82-16 according to the performance standard AASHTO MP 1. The first of those values seen in the performance grading represents a maximum 7-day temperature average of the asphalt pavement, whereas the second value of the performance grading represents a minimum design temperature of the asphalt pavement. In this respect, the bitumen adjusted for the performance grading PG-82-16 shows high performance under hot climate and dense traffic zones, as well as providing higher resistance against rutting and fatigue-induced cracks.

**Table 5: Performance properties of the modified bituminous mixture of Example 1**

| **Property** | **Unit** | **Standard No** | **PG 82-16** | **Example 1** |
|---|---|---|---|---|
| Softening point | °C | TS EN 1427 | ≥ 70 | 72.6 |
| Dynamic Shear Rheometer (G^{*}/sinδ> 1 kPa) | °C | TS EN 14770 | ≥ 82 | 84.4 |
| Storage Stability | °C | TS EN 13399 | - | - |
| Softening Point, Lower | °C | | - | 71.5 |
| Softening Point, Higher | °C | | - | 70.4 |
| Softening point, difference | °C | | ≤ 5 | 1.1 |
| Beam bending rheometer | °C | TS EN 14771 | ≤ -6 | -6 |

Considering the results given in table 5, it was concluded that the results achieved with the formulation developed is within the interval PG-82-16. In this respect, the developed product and the stirring method both provides the use of relatively higher-sized petroleum coke samples without any homogeneity-related problems, and the production of bitumen with high performance.

The modified bituminous mixture (Example 1) disclosed above is subjected to performance tests and an asphalt product comprising the modified bituminous mixture is subjected to design and durability tests. According to asphalt tests conducted, the properties of fine and coarse aggregates used and the proportions at which the aggregates are used, as well as their grading are given in tables 6 and 7, respectively. Asphalt design studies are conducted in line with the standard "Asphalt Institute MS-2" with the results given in table 8.

**Table 6: Properties Of Aggregates Used In Asphalt Design Studies**

| **Test Name** | **Test Method** | **Unit** | **Test Result** |
|---|---|---|---|
| Resistance to Fragmentation (Los Angeles Abrasion Loss) 500 rpm | TS EN 1097-2 | % | **26,0** |
| Durability Against Weather Impacts (loss with MgSO4) | TS EN 1367-2 | % | **1,64** |
| Flatness Index (for aggregates of 5-12mm) | TS EN 933-3 | % | **22,0** |
| Flatness Index (for aggregates of 12-19mm) | TS EN 933-3 | % | **14,0** |
| Peeling Strength, surface covered with % of bitumen (following 24 hours in 60°C water) | TS EN 12697-11 | % | **60** |
| Particle density in Coarse Aggregates (volume specific Weight-dry) | TS EN 1097-6 | gr/cm3 | **2,713** |
| Water absorption in Coarse Aggregates | TS EN 1097-6 | % | **0.31** |
| Particle density in Fine Aggregates (volume specific Weight -dry- average) | TS EN 1097-6 * | gr/cm3 | **2,666** |
| Water absorption in Fine Aggregates, average | TS EN 1097-6 * | % | **0,63** |
| Methylene Blue (0/2 mm fraction in fine aggregate) | TS EN 933-9 * | g/kg | **2,0** |
| Plasticity Index | TS 1900-1 | % | **NP** |
| Filler Particle Density | TS EN 1097-7 * | gr/cm3 | **2.718** |
| Determination | | | |

Some properties of aggregates, e.g. resistance against fragmentation, durability against weather impacts, density, and adhesion of aggregates to bitumen under the influence of water were determined with the tests, the results of which are given in table 6. In addition to the physical properties of aggregates, an aggregate gradation test was performed as a significant parameter in relation to the workability of asphalt mixtures, the results of which are given in table 7.

**Table 7: Proportions of aggregates used and the gradation of mixture**

| **Use proportion** | | **%12** | **%48** | **%40** | **Mixture gradation** | **Technical Specifications limits of Highway Commission** |
|---|---|---|---|---|---|---|
| Sieve Aperture | | **12-19 mm** | **5-12 mm** | **0-5 mm** | | |
| inch | mm | | | | | |
| 3/4" | 19 | 100 | 100 | 100 | 100.0 | 100 |
| 1/2" | 12.5 | 47 | 99.4 | 100 | 93.4 | 88-100 |
| 3/8" | 9.5 | 21.9 | 83.6 | 100 | 82.8 | 72-90 |
| No 4 | 4.75 | 1.3 | 17.4 | 99.6 | 48.3 | 42-52 |
| No 10 | 2 | 0.6 | 7.1 | 58.7 | 27.0 | 25-35 |
| No 40 | 0.42 | 0.6 | 3.7 | 26 | 12.2 | 10-20 |
| No 80 | 0.18 | 0.6 | 2.8 | 18 | 8.6 | 7-14 |
| No 200 | 0.075 | 0.4 | 2.3 | 12 | 6.0 | 3-8 |

With the gradation results obtained in table 7, the proportions was determined at which the aggregates of different sizes should be included to an aggregate mixture that will fall within the specifications limits. According to the results obtained, it was determined that the mixture should contain 12% of 12-19 mm aggregates, 48% of 5-12 mm aggregates and 40% of 0-5 mm aggregates.

**Table 8: Asphalt Design and Durability Results**

| **Test Name** | **Test Method** | **Additive-free Bitumen** | **Example 1** |
|---|---|---|---|
| Marshall Stability, kg | TS EN 12697-34 | 1060 | 1795 |
| Void, % | TS EN 12697-8 | 4 | 4 |
| Void Filled With Asphalt, % | TS EN 12697-8 | 71.00 | 71.55 |
| Void Between Aggregates, (VMA) % | TS EN 12697-8 | 14.20 | 14.96 |
| Flow, mm (10⁻³ in) | TS EN 12697-34 | 2.90 | 4.97 |
| Filler/Bitumen Proportion | - | 1.2 | 1.4 |
| Bitumen (by weight, 100) | TSEN 12697-1 | 4.8 | 4.9 |
| Rutting (at 30000 rpm, 60°C) | TS EN 12697-22 | 12.2 | 3.7 |

According to the results given in table 8, an improvement of around 230% is achieved with the formulation developed according to the present invention in resistance against rutting as compared to additive-free bitumen.

The method for producing a modified bituminous mixture suitable for use in asphalt pavements on roads, developed according to the present invention, comprises the steps of fluidizing the bitumen by heating the same preferably to 135°C; supplying fluidized bitumen to a pilot-sized polymer-modified bitumen unit (the pilot-sized polymer-modified bitumen unit preferably has a modified bitumen production capacity of 22 liters) comprising a first grinder (the first grinder is preferably of 3 kW power and of 200-500 liter/hour capacity); setting the temperature of said unit to 170-190°C, preferably to 180°C and maintaining the set temperature; obtaining a mixture of bitumen-first additive by adding a predetermined proportion, preferably 4% of a first additive to bitumen; grinding said mixture in a second grinder having preferably a shear rate of 2800 rpm; subjecting the mixture from the second grinder to an aging process at 180°C and 250 rpm stirring speed for 1-4 hours bearing in mind the chemical structure of bitumen (SARA (Saturate-Aromatic-Resin-Asphaltene) content); following the completion of the aging process, obtaining a mixture of bitumen-first additive-second additive by adding a predetermined amount of a second additive to the mixture of bitumen-first additive and strirring the resulting mixture; adding 10% by weight of a predetermined amount, preferably 20% of a third additive to the mixture of bitumen-first additive-second additive and stirring the resulting mixture at 250 rpm for 3 minutes; adding the remaining third additive to the mixture of bitumen-first additive-second additive so that each time 10% thereof is added; obtaining a modified bituminous mixture by stirring the mixture comprising bitumen, the first additive, the second additive, and the third additive for a predetermined amount of time (preferably 30 minutes).

In the production method developed according to the present invention, it is provided to achieve a homogeneous mixture of bitumen-first additive with the help of the grinding process in said second grinder. After a predetermined amount of second additive is added to the first additive, 10% fractions of the third additive are added to the mixture of bitumen, first additive and second additive, such that aggregation is prevented and a homogeneous mixture is obtained.

In the production method developed according to the present invention, the remaining third additive is preferably added so that at 3-minute intervals each time a 10% fraction thereof is added as the mixture is stirred at 250 rpm in a low-rpm mixer under 180 °C.

In the production method of modified bitumen developed according to the present invention, samples taken from the mixture of bitumen-first additive at certain intervals (e.g. hourly) are examined under fluorescence microscope according to the standard EN 13632 to see if the aging process went to completion or not. When the polymer phase and the bitumen phase form a homogeneous single phase under the fluorescence microscope, it is decided that the aging process is completed.

By virtue of the modified bituminous mixture and the production method thereof for use in asphalt pavements developed according to the present invention, low viscosity modified bituminous mixtures are obtained by adding additives of larger particle size to bitumen without encountering any homogeneity-related problems, these mixtures showing more superior durability properties and reducing energy costs in asphalt applications.

## Claims

1. A modified bituminous mixture suitable for use in asphalt pavements on roads, **characterized by** comprising bitumen with a penetration value from 40 to 100 dmm, a styrene-conjugated diene triblock copolymer as a first additive by weight of 3 to 7%, a viscosity-lowering agent as a second additive by weight of 0.1 to 1%, and a carbon-based solid Petroleum coke as a third additive with a particle size between 0.3 mm to 1.18 mm by weight of 5 to 25%, which is a product of delayed coking units of refineries.

2. The mixture according to claim 1, **characterized in that** the viscosity-lowering agent is selected from a group comprising zeolite derivatives and/or a paraffin wax consisting of aliphatic hydrocarbon chains comprising C40-C120 carbon obtained by Fisher-Tropsch method .

3. A production method of a modified bituminous mixture according to any of the preceding claims, **characterized by** comprising the steps of
- fluidizing bitumen,
- supplying the fluidized bitumen to a pilot-sized polymer-modified bitumen unit, having a modified bitumen production capacity of 22 L, comprising a first grinder,
- setting the temperature of said unit to 170-190°C and maintaining the set temperature,
- obtaining a mixture of bitumen-first additive by adding a predetermined proportion of a first additive to bitumen;
- grinding said mixture in a second grinder,
- subjecting the mixture from the second grinder to an aging process at 180°C under 250 rpm stirring speed for 1-4 hours,
- following the completion of the aging process, obtaining a mixture of bitumen-first additive-second additive by adding and stirring a predetermined amount of a second additive to the mixture of bitumen-first additive;
- adding and stirring 10% by weight of a predetermined amount of a third additive to the mixture of bitumen-first additive-second additive
- adding the remaining third additive to the homogeneous mixture of bitumen-first additive-second additive so that each time 10% of the remaining amount of third additive is added;
- obtaining a modified bituminous mixture by mixing the mixture of bitumen-first additive-second additive and third additive for a predetermined amount of time.

4. The method according to claim 3, **characterized in that** bitumen is fluidized by heating to 135°C.

5. The method according to claim 3, **characterized in that** the temperature of said unit is set to 180°C.

6. The method according to claim 3, **characterized in that** a mixture of bitumen-first additive is obtained by adding 4% of the first additive to bitumen.

7. The method according to claim 3, **characterized in that** the grinding process in said second grinder is carried out under 2800 rpm shear rate.

8. The method according to claim 3, **characterized in that** the first grinder is of 3 kW power and 200-500 liter/hour capacity.

9. The method according to claim 3, **characterized in that** the remaining third additive is added to the mixture of bitumen-first additive-second additive such that each time a 10% fraction thereof is added at 3-minute intervals as the mixer continues stirring at 250 rpm under 180°C.

10. The method according to claim 3, **characterized in that** the mixture comprising bitumen, the first additive, the second additive and the third additive is stirred for 30 minutes.

11. A ready to use asphalt composition **characterized by** comprising modified bituminous mixture according to any one of the claim 1-2 and an aggregate mixture.

12. A ready to use asphalt composition according to claim 11, **characterized in that** said aggregate mixture comprises 12% by weight of 12-19 mm aggregates, 48% by weight of 5-12 mm aggregates and 40% by weight of 0-5 mm aggregates.

## Patentansprüche

1. Modifizierte bituminöse Mischung, die zur Verwendung als Asphaltbelag auf Straßen geeignet ist, **dadurch gekennzeichnet, dass** die Mischung Bitumen mit einem Penetrationsindex von 40 bis 100 dmm, ein Styrol-konjugiertes Dien-Triblock-Copolymer als ersten Zusatzstoff mit 3 bis 7 Gew.-%, ein viskositätssenkendes Mittel als zweiten Zusatzstoff mit 0,1 bis 1 Gew.-% und einen festen kohlenstoffbasierten Petrolkoks, der Produkt einer verzögerten Verkokungseinheit von Raffinerien ist, als dritten Zusatzstoff mit einer Teilchengröße zwischen 0,3 mm bis 1,18 mm mit 5 bis 25 Gew.-% aufweist.

2. Mischung nach Anspruch 1, **dadurch gekennzeichnet, dass** das viskositätssenkende Mittel ausgewählt ist aus einer Gruppe, die Zeolithderivate und/oder ein Paraffinwachs aufweist, das aus aliphatischen Kohlenwasserstoffketten mit C40-C120 Kohlenstoffatomen bestehen und durch Fisher-Tropsch-Synthese hergestellt ist.

3. Produktionsverfahren für ein modifiziertes bituminöses Gemisch nach einem der vorhergehenden Ansprüche, **dadurch gekennzeichnet, dass** es die Schritte aufweist
- Verflüssigen von Bitumen,
- Zuführen des verflüssigten Bitumens in eine polymermodifizierte Bitumenanlage von Pilotprojektgröße mit einer Produktionskapazität für modifiziertes Bitumen von 22 L, die ein erstes Mahlwerk aufweist,
- Einstellen der Temperatur der Einheit auf 170-190°C und Aufrechterhalten der eingestellten Temperatur,
- Erhalt eines Gemisches aus Bitumen und erstem Zusatzstoff, indem ein vorgegebener Prozentsatz eines ersten Zusatzstoffes dem Bitumen hinzugefügt wird,
- Mahlen des Gemisches in einem zweiten Mahlwerk,
- Durchführen eines Alterungsprozesses für das Gemisch aus dem zweiten Mahlwerk bei 180°C, unter einer Rührgeschwindigkeit von 250 Umdrehungen pro Minute für 1-4 Stunden,
- nach Abschluss des Alterungsprozesses Erhalt eines Gemisches aus Bitumen, erstem Zusatzstoff und zweitem Zusatzstoff, indem eine vorgegebene Menge eines zweiten Zusatzstoffs dem Gemisch aus Bitumen und erstem Zusatzstoff hinzugefügt und untergerührt wird,
- Hinzuführen und Unterrühren von 10 Gew.-% einer vorgegebenen Menge eines dritten Zusatzstoffes zu dem Gemisch aus Bitumen, erstem Zusatzstoff und zweitem Zusatzstoff,
- Hinzufügen des verbleibenden dritten Zusatzstoffes zu dem homogenen Gemisch aus Bitumen, erstem Zusatzstoff und zweitem Zusatzstoff, so dass jedes Mal 10% der verbleibenden Menge des dritten Zusatzstoffs hinzugefügt wird,
- Erhalt eines modifizierten bituminösen Gemisches, indem das Gemisch aus Bitumen, erstem Zusatzstoff und zweitem Zusatzstoff mit dem dritten Zusatzstoff für eine vorgegebene Zeit gemischt wird.

4. Verfahren nach Anspruch 3, **dadurch gekennzeichnet, dass** das Bitumen durch Erwärmung auf 135°C verflüssigt wird.

5. Verfahren nach Anspruch 3, **dadurch gekennzeichnet, dass** die Temperatur der Einheit auf 180°C eingestellt wird.

6. Verfahren nach Anspruch 3, **dadurch gekennzeichnet, dass** ein Gemisch aus Bitumen und erstem Zusatzstoff erhalten wird, indem dem Bitumen 4% des ersten Zusatzstoffes hinzugefügt werden.

7. Verfahren nach Anspruch 3, **dadurch gekennzeichnet, dass** der Mahlprozess in dem zweiten Mahlwerk unter einer Schergeschwindigkeit von 2800 Umdrehungen pro Minute durchgeführt wird.

8. Verfahren nach Anspruch 3, **dadurch gekennzeichnet, dass** das erste Mahlwerk eine Leistung von 3 kW und eine Kapazität von 200-500 Liter /Stunde hat.

9. Verfahren nach Anspruch 3, **dadurch gekennzeichnet, dass** der verbleibende dritte Zusatzstoff dem Gemisch aus Bitumen, zweitem Zusatzstoff und drittem Zusatzstoff hinzugefügt wird, so dass jedes Mal ein Bruchteil von 10% im Abstand von 3 Minuten hinzugefügt wird, während der Mischer fortfährt, bei 250 Umdrehungen pro Minute bei 180°C zu rühren.

10. Verfahren nach Anspruch 3, **dadurch gekennzeichnet, dass** das Gemisch enthaltend Bitumen, ersten Zusatzstoff, zweiten Zusatzstoff und dritten Zusatzstoff für 30 Minuten gemischt wird.

11. Gebrauchsfertige Asphaltzusammensetzung, **dadurch gekennzeichnet, dass** sie das modifizierte bituminöse Gemisch gemäß einem der Ansprüche 1-2 und eine Zuschlagmischung aufweist.

12. Gebrauchsfertige Asphaltzusammensetzung nach Anspruch 11, **dadurch gekennzeichnet, dass** die Zuschlagmischung 12 Gew.-% von 12-19 mm Zuschlagstoffe, 48 Gew.-% von 5-12 mm Zuschlagstoffe und 40 Gew.-% von 0-5 mm Zuschlagstoffe aufweist.

## Revendications

1. Mélange bitumineux modifié convenant à une utilisation dans les chaussées d'asphalte sur les routes, **caractérisé en ce qu'**il comprend un bitume à valeur de pénétration comprise entre 40 et 100 dmm, un copolymère tribloc diène conjugué au styrène en tant que premier additif en poids de 3 à 7 %, un agent d'abaissement de viscosité en tant que second additif en poids de 0,1 à 1 %, et un coke de pétrole solide à base de carbone en tant que troisième additif avec une taille de particules comprise entre 0,3 mm et 1,18 mm en poids de 5 à 25 %, qui est un produit d'unités de cokéfaction retardée de raffineries.

2. Mélange selon la revendication 1, **caractérisé en ce que** l'agent d'abaissement de viscosité est choisi dans un groupe comprenant des dérivés de zéolithes et/ou une cire de paraffine constituée de chaînes d'hydrocarbures aliphatiques comprenant du carbone C40-C120 obtenu par le procédé de Fisher-Tropsch.

3. Procédé de production d'un mélange bitumineux modifié selon l'une quelconque des revendications précédentes, **caractérisé en ce qu'**il comprend les étapes consistant à
- fluidifier le bitume,
- fournir le bitume fluidifié à une unité de bitume modifié aux polymères de taille pilote, ayant une capacité de production de bitume modifié de 22 L, comprenant un premier broyeur,
- régler la température de ladite unité à 170-190°C et maintenir la température réglée,
- obtenir un mélange de bitume et de premier additif en ajoutant une proportion prédéterminée d'un premier additif au bitume ;
- broyer ledit mélange dans un second broyeur,
- soumettre le mélange issu du second broyeur à un processus de vieillissement à 180°C sous une vitesse d'agitation de 250 tr/min pendant 1 à 4 heures,
- après l'achèvement du processus de vieillissement, obtenir un mélange de bitume, de premier additif et second additif en ajoutant et en agitant une quantité prédéterminée d'un second additif au mélange de bitume et de premier additif ;
- ajouter le reste du troisième additif au mélange homogène de bitume, de premier additif et de second additif de manière à ajouter à chaque fois 10 % de la quantité restante du troisième additif ;
- obtenir un mélange bitumineux modifié en mélangeant le mélange de bitume, de premier additif, de second additif et de troisième additif pendant une durée prédéterminée.

4. Procédé selon la revendication 3, **caractérisé en ce que** le bitume est fluidifié par chauffage à 135°C.

5. Procédé selon la revendication 3, **caractérisé en ce que** la température de l'unité est réglée à 180°C.

6. Procédé selon la revendication 3, **caractérisé en ce que** le mélange de bitume et de premier additif est obtenu en ajoutant 4% du premier additif au bitume.

7. Procédé selon la revendication 3, **caractérisé en ce que** le processus de broyage dans ledit second broyeur est effectué à une vitesse de cisaillement de 2800 tr/min.

8. Procédé selon la revendication 3, **caractérisé en ce que** le premier broyeur a une puissance de 3 kW et une capacité de 200-500 litres/heure.

9. Procédé selon la revendication 3, **caractérisé en ce que** le troisième additif restant est ajouté au mélange de bitume, de premier additif et de second additif de manière à ce que chaque fois une fraction de 10 % de celui-ci soit ajoutée à des intervalles de 3 minutes pendant que le mélangeur continue d'être agité à 250 tr/min sous 180°C.

10. Procédé selon la revendication 3, **caractérisé en ce que** le mélange comprenant le bitume, le premier additif, le second additif et le troisième additif est agité pendant 30 minutes.

11. Composition d'asphalte prête à l'utilisation **caractérisée en ce qu'**elle comprend un mélange bitumineux modifié selon l'une quelconque des revendications 1 à 2 et un mélange d'agrégats.

12. Composition d'asphalte prête à l'utilisation selon la revendication 11, **caractérisée en ce que** ledit mélange d'agrégats comprend 12 % en poids d'agrégats de 12 à 19 mm, 48 % en poids d'agrégats de 5 à 12 mm et 40 % en poids d'agrégats de 0 à 5 mm.
